# EUROPEAN PATENT APPLICATION

(11) **EP 1 338 833 A2**
(43) Date of publication of application: **27.08.2003**
(21) Application number: 03003707.1
(22) Date of filing: 19.02.2003
(51) Int. Cl.: F16K 7/20, F16K 31/50

(54) **Regulation device to regulate the flow of a fluid**

(30) Priority: 20.02.2002 IT UD20020042
(71) Applicant: Emmeti S.p.A., 31100 Treviso (IT)
(72) Inventor: Visentin, Eros, 33080 Porcia (PN) (IT)
(74) Representative: Petraz, Gilberto Luigi

(57) **Abstract**

Regulation device (10) to regulate the flow of a fluid in a pipe (11) provided with an inlet (12) and an outlet (13) for the fluid, made on one segment of its wall (11a). The i device (10) comprises a shutter element (21) movable between a first position, wherein it allows the free passage of the fluid along the pipe (11), and a second position, wherein it at least partly impedes the passage. The shutter element (21) comprises at the end an element (24) at least partly deformable, if subjected to compression, which is selectively taken in abutment against the segment of wall (11a) in order to at least partly interrupt the passage of fluid between the inlet (12) and the outlet (13).

## Description

### FIELD OF THE INVENTION

The present invention concerns a regulation device to regulate the flow of a fluid, such as for example a valve for a tap, of the type provided with interruption means at least partly deformable, if subjected to compression stresses, in order to regulate or interrupt the passage of fluid in a pipe.

### BACKGROUND OF THE INVENTION

Devices to interrupt and regulate the flow of a fluid are known, such as for example the valves used to regulate the passage of a fluid along a pipe.

Conventional devices comprise interruption means consisting of an external hand-wheel which can be driven manually and connected, by means of a rod, to a shutter arranged inside the pipe. Said shutter usually consists of a metal sphere arranged perfectly inside a mating spherical seating, and provided with a diametrically through hole which, when it is aligned between the inlet and outlet of the pipe, allows the fluid to pass freely.

Such conventional devices, apart from the problems of complex assembly and of cost, also have the disadvantage that the internal cleaning and the maintenance of the pipe are impeded, since the sphere cannot be removed from its seating unless the pipe is dismantled into at least two parts. This entails the need to remove the whole device from the plant in which it is installed, with the possibility that some parts of the wall have to broken if the plant is disposed inside a wall.

Another type of conventional device includes interruption means comprising a disk-shaped shutter, flat, which can be selectively displaced along an axis substantially orthogonal to the direction in which the flow of fluid passes, in order to regulate and/or interrupt said flow. Such interruption means are normally screwed to the pipe, so that the shutter can be easily removed from the pipe; however, _the use of this type of shutter requires the pipe to have the inlet and outlet of the fluid offset with respect to each other, since, in order to allow the interruption, the shutter must be positioned in an intermediate position between the two.

This causes both problems of complexity in production and also hydraulic problems, such as loss of load, which reduce the performance of the plant.

The Applicant has devised and embodied the present invention to overcome these shortcomings of the state of the art and to obtain further advantages.

### SUMMARY OF THE INVENTION

The present invention is set forth and characterized essentially in the main claim, while the dependent claims describe other innovative characteristics of the invention.

One purpose of the invention is to achieve a regulation device to regulate the flow of a fluid wherein it is possible to perform, simply and quickly, the cleaning and maintenance operations of its internal parts without needing to dismantle the whole device from the plant in which it is installed. Another purpose is to achieve a simple, economical and functional device, less subject to wear or needing much maintenance, which will guarantee a water-tight closure to the passage of the fluid without requiring particular or costly working, and which does not create problems of a hydraulic nature in the plant.

The regulation device according to the present invention can be applied to a pipe equipped with at least an inlet and at least an outlet for the fluid.

In accordance with these purposes, the regulation device according to the invention comprises interruption means provided with a shutter element arranged inside the pipe and an actuation element able to move the shutter between a first position, wherein it allows the free passage of the fluid through the pipe, and a second position, wherein it at least partly impedes the passage of the fluid.

The shutter element comprises at the end an element at least partly deformable, if subjected to compression stresses, which has a substantially semi-spherical shape, with an axis coaxial to the axis of the shutter element. Said deformable element is able to be taken selectively in abutment against a segment of wall of the pipe, wherein the inlet and outlet of the device are arranged, in order to at least partly prevent the passage of fluid along the pipe.

The movement of the shutter element occurs substantially along a straight line intersecting the axis of the pipe and the deformation of the shutter element occurs as soon as it is taken into abutment and is compressed against a wall of the pipe, affecting the whole transverse section of the pipe. This deformation guarantees a water-tight closing of the passage of fluid, without particular and costly works having to be carried out in the pipe, since the shutter element couples perfectly with the holes of the inlet and outlet of the water, covering them and thus stopping the flow of fluid.

Moreover, with the device according to the present invention, it is not necessary to offset the inlet and outlet of the pipe with respect to each other, since the deformable element, having a substantially semi-spherical shape, is interposed between them, occupying the entire volume of passage and hence guaranteeing the interruption of the fluid between inlet and outlet, located axially; this ensures that the losses of load during the passage of the fluid are reduced to a minimum.

Another advantage is given by the fact that the pipe and the regulation device according to the invention are associated with each other by means of rapid coupling means, such as for example a threading, a bayonet joint, or otherwise; these means allow to dismantle the regulation device rapidly and easily from the pipe in order to allow a rapid and simple cleaning and maintenance of the shutter element, of the inside of the pipe, or of any other component which cannot be reached from the outside.

### BRIEF DESCRIPTION OF THE DRAWINGS

These and other characteristics of the present invention will become apparent from the' following description of a preferential form of embodiment, given as a non-restrictive example with reference to the attached drawings wherein:

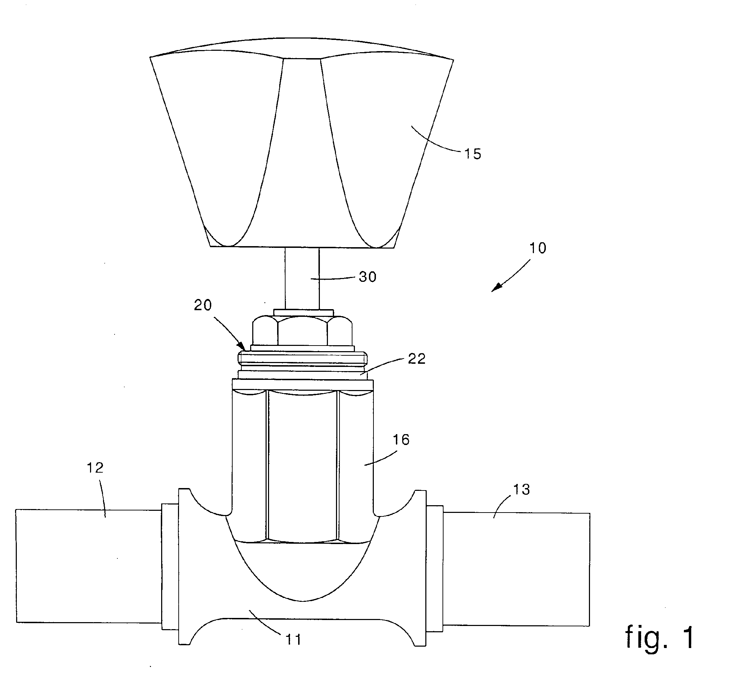

- fig. 1 is a side view of the device according to the invention applied to a water pipe;
- fig. 2 shows a section of the device in fig. 1 in a first open position;
- fig. 3 shows a section of the device in fig. 1 in a second open position.

### DETAILED DESCRIPTION OF A PREFERENTIAL FORM OF EMBODIMENT OF THE INVENTION

With reference to the attached figures, a regulation device 10 to regulate the flow of fluid, such as for example water, according to the present invention is applied to a pipe 11, of the type comprising an inlet 12 and an outlet 13 axially aligned with each other. In this case, the pipe 11 also comprises, perpendicular to the inlet 12 and outlet 13, a tubular connection 16 able to allow to house the device 10.

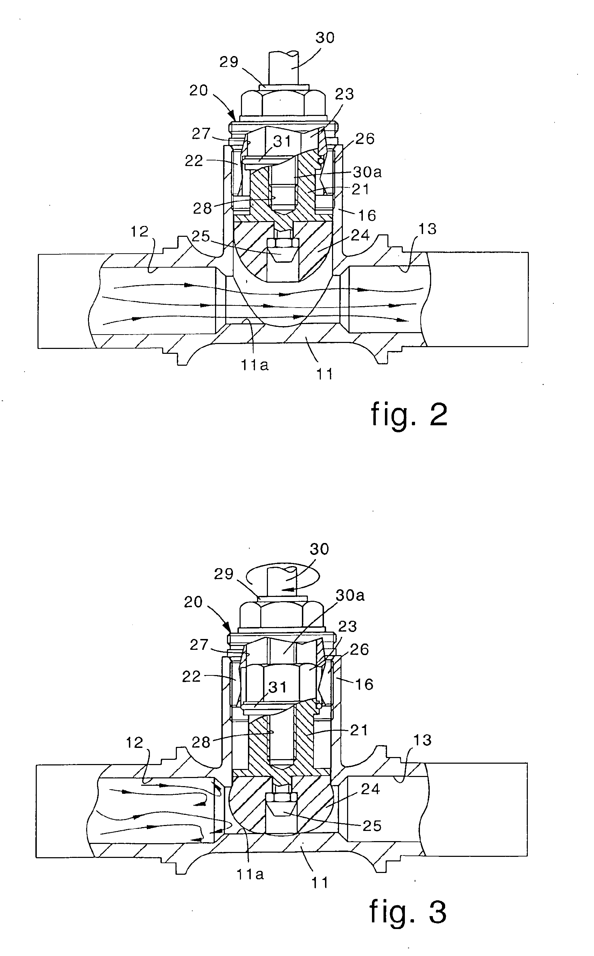

The device 10 comprises interruption means 20 provided with a shutter 21, a connection block 22 and a drive element 15 able to move, by means of a rod 30, the shutter 21 between a first position (fig. 2), wherein it allows the free passage of the flow of water, and a second position (fig. 3), wherein it at least partly impedes the passage of water.

The shutter 21 comprises at the front part a deformable element 24, attached by means of a nut 25. Said deformable element 24 is made for example of rubber, plastic or similar materials which deform if subjected to compression stress, is substantially semi-spherical in shape and is able to be taken selectively in abutment against an inner wall 11a of the pipe 11. When it is thus compressed, the deformable element 24 expands laterally and fills all the usable transverse section of the pipe 11 between the inlet 12 and the outlet 13, so as to create a water-tight closing and hence totally interrupt the flow of water.

The nut 25, in some cases, also functions as an end-of-travel element, in order to define the position of maximum advance of the shutter 21 towards the pipe 11.

At the rear, the shutter 21 is provided with an outer guide shaping 23 having a substantially hexagonal transverse section, and able to slide in a mating seating 27 made inside said connection block 22.

The shutter 21 also comprises, axially and at the rear, a threaded hole 28 inside which a terminal threaded part 30a of the rod 30 is able to be inserted, which determines the linear movement of the shutter element 21.

A sealing packing 31 is also provided on said shutter 21, such as for example an O-ring, able to prevent possible infiltrations of water from leaking from the connection 16.

The block 22 allows to connect the shutter 21 to the connection 16 by means of a threading 26. Said threading 26 also allows, in case of necessity, to dismantle the shutter 21 from the pipe 11, to carry out cleaning or maintenance operations or to replace parts, without needing to dismantle the pipe 11 into several parts, or from a pre-existing plant.

As already said, the connection block 22 is also provided inside with the seating 27, inside which the shutter 21 slides linearly, and with an axial hole, not shown in the drawings, inside which the rod 30 is inserted. Said rod 30 can turn freely inside the respective hole, but is clamped axially by a sealing ring 29, such as for example a seeger, so that when the rod 30 is made to rotate by the drive element 15, it rotates on itself, screwing or unscrewing the shutter 21 which, due to this, advances or retreats inside the seating 27.

It is clear that modifications and/or additions of parts can be made to the device 10 as described heretofore, without departing from the field and scope of the present invention.

For example, the threading 26 can be replaced by a bayonet joint, or by any other rapid coupling system which guarantees a solid union between the connection block 22 and the tubular extension 26 of the pipe 11.

It is also clear that, although the present invention has been described with reference to specific examples, the person of skill in the art shall certainly be able to achieve many other equivalent forms of regulation device to regulate the flow of a fluid, all of which shall come within the field and scope of the present invention.

## Claims

1. Regulation device to regulate the flow of a fluid in a pipe (11) including at least an inlet (12) and at least an outlet (13) for said fluid, made on at least one segment of wall (11a) of said pipe (11), said device (10) comprising a shutter element (21) movable between a first position, wherein it allows the free passage of the fluid along said pipe (11), and a second position, wherein it at least partly impedes said passage, **characterized in that** said shutter element (21) comprises at the end an element (24) at least partly deformable, if subjected to compression, and able to be selectively taken in abutment against said segment of wall (11a) in order to at least partly interrupt the passage of fluid between said inlet (12) and said outlet (13).

2. Regulation device as in claim 1, **characterized in that** said deformable element (24) is substantially semi-spherical in shape with an axis coaxial to the axis of said shutter element (21).

3. Regulation device as in claim 1, **characterized in that** reciprocal coupling means (26) are arranged between said shutter element (21) and said pipe (11) to remove said shutter element (21) from said pipe (11).

4. Regulation device as in claim 3, **characterized in that** said reciprocal coupling means comprise a threading (26).

5. Regulation device as in claim 3, **characterized in that** said reciprocal coupling means (26) comprise a bayonet joint.

6. Regulation device as in claim 1, **characterized in that** said deformable element (24) is associated with said shutter element (21) by means of a nut (25) able to function as an end-of-travel element.

7. Regulation device as in any claim hereinbefore, **characterized in that** said pipe (11) comprises a connection (16) substantially orthogonal to the direction of passage of said fluid, wherein said shutter element (21) is able to be inserted and to slide linearly.

8. Regulation device as in claims 1 and 7, **characterized in that** said shutter element (21) comprises, on the opposite side with respect to said deformable element (24), an outer guide shaping (23) having at least two surfaces substantially parallel to each other and able to slide inside a mating seating (27) made inside said connection (16).

9. Regulation device as in claim 8, wherein the shutter element (21) is associated with outside drive means (15), **characterized in that** said shutter element (21) comprises a threaded axial hole (28), wherein a rod (30) is inserted able to transmit the movement imparted by said drive means (15) to said shutter element (21).
